# EUROPEAN PATENT APPLICATION

(11) **EP 4 261 444 A1**
(43) Date of publication of application: **18.10.2023**
(21) Application number: 21903691.0
(22) Date of filing: 23.11.2021
(51) Int. Cl.: F16K 31/08, F16K 15/06, F16K 31/06, F16K 7/12, F16K 31/04

(54) **VALVE OPENED/CLOSED BY PERMANENT MAGNET**

(30) Priority: 09.12.2020 KR 20200171452
(71) Applicant: Lim, Eig Soo, Suwon-si, Gyeonggi-do 16493 (KR)
(72) Inventor: Lim, Eig Soo, Suwon-si, Gyeonggi-do 16493 (KR)
(74) Representative: Cabinet Chaillot
(86) International application number: PCT/KR2021/017297
(87) International publication number: WO 2022/124645

(57) **Abstract**

The present invention relates to a valve opened or closed using permanent magnets, and more specifically, to permanent magnets which face each other or are separated from each other to generate or remove a strong repulsive force or an attractive force so as to open or close a valve using low power. According to the present invention, a flow of a fluid is quickly allowed or blocked by an interaction of magnetic forces of permanent magnets, even when a flow or block state is continuously maintained, additional power is not required, and a valve is driven using low power. Accordingly, there are effects that economy of reducing energy and utility in use are provided, a small servo motor or the like is applied as a driving device to miniaturize an exterior of the valve, and thus usefulness and expansion of use of the valve are provided.

## Description

### [Technical Field]

The present invention relates to a valve configured to automatically supply or discharge a fluid and opened or closed using permanent magnets, and more specifically, to a valve opened or closed using permanent magnets and designed to reduce power consumption and miniaturize an exterior of the valve, wherein the permanent magnets face or are separated from each other to generate or remove a strong repulsive force or an attractive force so as to open or close the valve using low power.

### [Background Art]

In general, among valves which automatically supply or discharge water among fluids, solenoid valves are used for washing machines, water purifiers, dishwashers, boilers, and the like, and electric ball valves are used for water pipes and the like. As an example of the solenoid valve, in the case of a normally closed type, a valve is opened by an electromagnetic force of a coil to supply water, and there are problems that power is consumed and heat is generated while the power is continuously supplied to the coil during water supply. In addition, there are problems that the coil becomes large in order to generate the electromagnetic force greater than a water pressure in the valve, and an entire exterior of the solenoid valve is large and a weight thereof is high because a high voltage (12 V to 220 V) and power are used.

Meanwhile, in the case of the electric ball valve, although airtightness is good and power is not consumed during water supply, there are problems that it takes a certain amount of time for the valve to be completely opened and closed due to an internal friction force caused by the rotation of a ball and a water pressure in the valve, an electric motor becomes large to generate a high rotation torque of the ball, and an entire exterior of the electric ball valve becomes large and a weight thereof is also high because a high voltage (12 V to 220 V) and power are used.

### [Technical Problem]

The present invention is intended to address the above-described conventional problems.

First, the present invention is directed to providing utility and economy of reducing power consumption using a power-saving valve which is opened or closed using a voltage (5 V) and low power of an electronic circuit power supply, quickly allows or blocks a flow of a fluid, and does not consume power and does not generate heat in a state in which the flow is allowed or blocked.

Second, the present invention is directed to providing usefulness of expanding utilization and an application range of a valve by applying a small driving device driven using lower power to miniaturize an exterior of the valve in order to solve a problem of a large exterior and a high weight of the conventional valve to which a coil, an electric motor, and the like are applied.

### [Technical Solution]

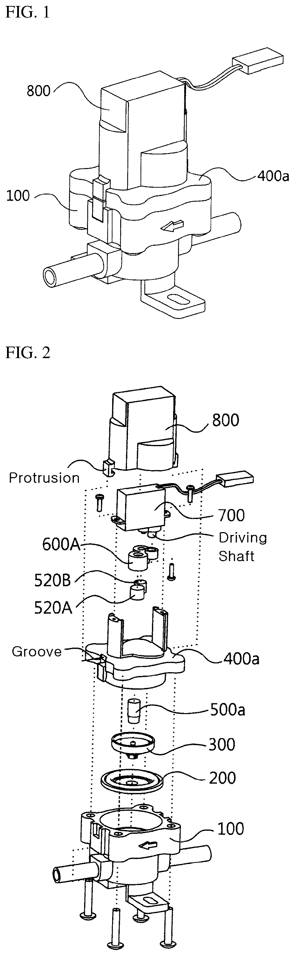

In order to achieve the above objectives to be solved by the present invention, a valve opened or closed using permanent magnets according to one embodiment of the present invention will be described with reference to FIGS. 2 to 4.

The valve may include a valve body 100 configured to receive a fluid through an inlet pipe formed at one side thereof and discharge the fluid through an outlet pipe formed at another side thereof though an orifice formed at a center, a diaphragm 200 of which one surface is pressed against an annular groove of an upper portion of the valve body and a lower surface seals the orifice and opens or closes the orifice using a difference in fluid pressure between an upper surface and the lower surface of the diaphragm, a stem 300 which is attached to the upper surface of the diaphragm and in which a pilot hole formed so that an upper surface of the stem communicates with an inner portion of the orifice is opened or closed to generate the difference in fluid pressure between the upper surface and the lower surface of the diaphragm, a cap 400a which is fastened to the upper portion of the valve body while pressing one surface of the diaphragm to maintain airtightness for the fluid in the valve body and of which lower surface is provided with a guide surface having a vertical cylindrical shape, an opening and closing permanent magnet 500a in which a strong permanent magnet such as neodymium is embedded and which vertically moves along the guide surface of the cap to open or close the pilot hole, an attractive permanent magnet 520A which is a strong permanent magnet such as neodymium, reciprocates while in contact with an upper surface of the cap, and when facing the opening and closing permanent magnet at a predetermined position, generates an attractive force to pull the opening and closing permanent magnet upward so as to open the pilot hole, a repulsive permanent magnet 520B which is a strong permanent magnet such as neodymium, reciprocates while in contact with the upper surface of the cap, and when facing the opening and closing permanent magnet at the predetermined position, generates a repulsive force to push the opening and closing permanent magnet so as to close the pilot hole, a holder 600A of which a body is provided with a plurality of cylinders into which the attractive permanent magnet and the repulsive permanent magnet are inserted, a driving device 700 which is fixed to one surface of the cap and in which the holder is attached to a driving shaft and reciprocates to a predetermined position so that each of one surface of the attractive permanent magnet and one surface of the repulsive permanent magnet vertically faces the opening and closing permanent magnet to generate a repulsive force or an attractive force, wherein the driving device includes a servo motor which is small, capable of controlling a position, and driven using lower power, a cover 800 coupled to a groove in one side of the cap and configured to protect the driving device and the reciprocating movement of the holder from the outside, and the like, and thus the above objectives can be achieved.

### [Advantageous Effects]

A valve opened or closed using permanent magnets according to the present invention provides utility and economy of reducing power of the valve because the valve is opened or closed using low power due to a strong repulsive force and a strong attractive force between super-strong permanent magnets and an interaction, such as separation, of magnetic forces of the permanent magnets so that a flow of a fluid can be quickly allowed or blocked and an opened or closed state can be continuously maintained without supplying power or generating heat.

In addition, as an example of a driving device of the present invention, a small servo motor or the like driven by an electronic circuit power supply (5V) can be applied to miniaturize an exterior of a valve, and thus space utilization and usefulness of the valve are provided.

### [Description of Drawings]

FIG. 1 is a perspective view illustrating the exterior of a pilot-operated magnetic valve opened or closed using permanent magnets according to an embodiment of the present invention.
FIG. 2 is an exploded perspective view illustrating the pilot-operated magnetic valve opened or closed using the permanent magnets according to the embodiment of the present invention.
FIG. 3 is a cross-sectional perspective view illustrating the pilot-operated magnetic valve opened or closed using the permanent magnets, which blocks a fluid according to the embodiment of the present invention.
FIG. 4 is a cross-sectional perspective view illustrating the pilot-operated magnetic valve opened or closed using the permanent magnets, which allows a fluid to flow according to the embodiment of the present invention.
FIG. 5 is a cross-sectional perspective view illustrating a pilot-operated elastic valve opened or closed using permanent magnets, which blocks a fluid according to an embodiment of the present invention.
FIG. 6 is a cross-sectional perspective view illustrating a direct-operated magnetic valve opened or closed using permanent magnets, which blocks a fluid according to an embodiment of the present invention.
FIG. 7 is a cross-sectional perspective view illustrating a direct-operated elastic valve opened or closed using permanent magnets, which allows a fluid to flow according to an embodiment of the present invention.
FIG. 8 is cross-sectional perspective views illustrating opening and closing permanent magnets of the pilot-operated magnetic valve and the direct-operated magnetic valve that are opened or closed using the permanent magnets according to the embodiment of the present invention.
FIG. 9 is cross-sectional perspective views illustrating opening and closing permanent magnets of the pilot-operated elastic valve and the direct-operated magnetic valve that are opened or closed using the permanent magnets according to the embodiment of the present invention.

### [Best Modes of the Invention]

Hereinafter, valves opened or closed using permanent magnets according to embodiments of the present invention will be described in detail with reference to the accompanying drawings.

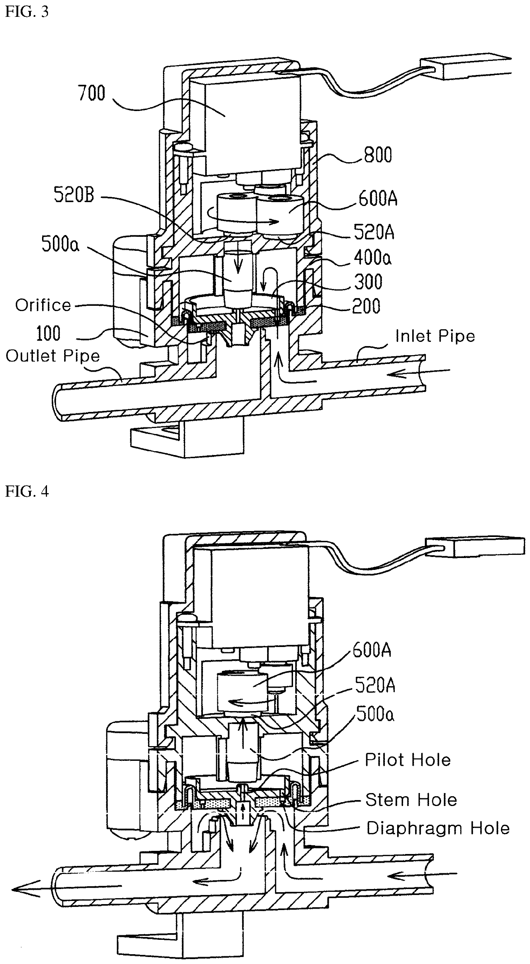

As in FIGS. 3 to 7, the present invention is divided into four types including a pilot-operated magnetic type, a pilot-operated elastic type, a direct-operated magnetic type, and a direct-operated elastic type according to a method (indirect method or direct method) of opening or closing an orifice of a valve body 100 and a return force (a magnetic force of a permanent magnet or an elastic force) of moving an opening and closing permanent magnet downward.

The four types according to the embodiments will be described in detail.

A pilot-operated magnetic valve according to a first embodiment operates in a method in which the orifice is indirectly opened or closed through a pilot hole of a stem 300, and an opening and closing permanent magnet is pushed and returned by a magnetic force of a permanent magnet.

That is, as in FIGS. 2 to 5, the pilot-operated magnetic valve operates in a method in which the pilot hole is indirectly opened or closed by a high pressure (for example, 0.7 to 10 bar) in the valve so that a diaphragm 200 opens or closes the orifice, and an opening and closing permanent magnet 500a configured to open or close the pilot hole is returned downward due to a repulsive interaction with a repulsive permanent magnet 520B formed of a permanent magnetic material. A process in which the above-described pilot-operated magnetic valve allows or blocks a flow of a fluid will be described.

As in FIG. 4, when a driving device 700 receives an external control signal and moves a holder 600A to a predetermined position and an attractive permanent magnet 520A vertically faces the opening and closing permanent magnet, an attractive force is caused by mutual incompatible poles, the opening and closing permanent magnet is pulled upward to open the pilot hole, and in this case, a fluid pressure on an upper surface of the diaphragm 200 decreases to a pressure in the orifice, a fluid pressure on a lower surface is applied to the diaphragm 200, and the diaphragm 200 moves upward to open the orifice so that a fluid flows.

In addition, as in FIG. 3, when the driving device returns the holder to an original position so that the repulsive permanent magnet 520B vertically face the opening and closing permanent magnet, a repulsive force is caused by the same poles, the opening and closing permanent magnet moves and returns downward to close the pilot hole, and in this case, fluid pressures on the upper surface and the lower surface of the diaphragm are equilibrated, a pressure on the upper surface is applied to the diaphragm, and the diaphragm moves downward to close the orifice so that the fluid is blocked.

Features of the above-described pilot-operated magnetic valve are as follows. The opening and closing permanent magnet is easily moved vertically by a strong repulsive force and a strong attractive force generated when the strong permanent magnets face, the magnetic forces are easily separated in a lateral direction to easily move the holder so that the valve may be opened or closed even using a voltage (5 V) and lower power of an electronic circuit power supply, the magnetic force of the permanent magnet maintains a flow or block state so that additional power is not required, particularly, since a small servo motor capable of accurately controlling reciprocating position movement of the holder can be applied as the driving device of the valve, power consumption can be reduced, and the valve can be miniaturized.

Hereinafter, components included in the pilot-operated magnetic valve will be described below in detail.

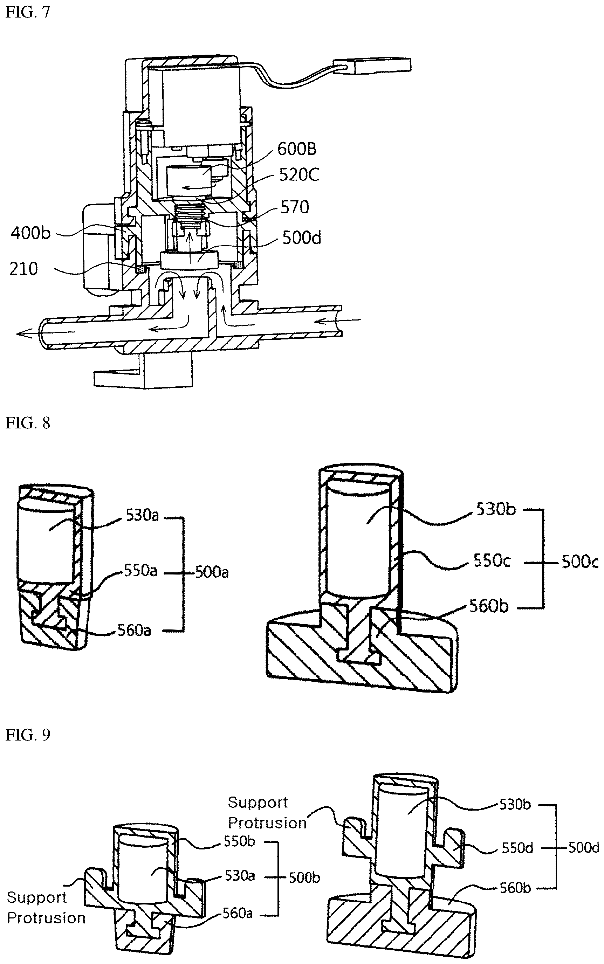

The components of the pilot-operated magnetic valve include a valve body 100 in which a fluid is introduced though an inlet pipe formed at one side, flows through an orifice formed as a vertical cylinder at a center, and is discharged through an outlet pipe formed at another side, the diaphragm 200 which is pressed against an annular groove for maintaining airtightness for an introduced fluid between the inside and outside of the valve body, of which the lower surface seals the orifice, in which the fluid is introduced along the upper surface of the diaphragm 200 through a plurality of diaphragm holes passing through one surface of the diaphragm 200, and which moves upward or downward by a difference in fluid pressure between the upper surface and the lower surface to open or close the orifice, the stem 300 which is attached to the upper surface of the diaphragm so that the diaphragm seals the orifice using a pressure of the fluid introduced into an upper portion through a stem hole passing through one surface, and opens or closes the pilot hole formed so that an upper surface of the stem 300 communicates with an inner portion of the orifice to generate a difference in fluid pressure between the upper surface and the lower surface of the diaphragm, a cap 400a which is fastened to an upper portion of the valve body while pressing the upper surface of the diaphragm to maintain airtightness for the fluid between the inside and outside of the valve body and in which a guide surface having a vertical cylindrical shape is formed on a lower surface of the cap 400a, the opening and closing permanent magnet 500a which vertically moves along the guide surface of the cap to open or close the pilot hole, in which an entire surface of a strong permanent magnet 530a is surrounded by a protection member 550a to prevent the strong permanent magnet 530a from being corroded by the fluid as in a cross-sectional perspective view of FIG. 8 and a rubber tip 560a formed of a rubber is attached to a contact portion with the pilot hole to maintain airtightness, the attractive permanent magnet 520A which is a strong permanent magnet such as neodymium and generates an attractive force using mutual incompatible poles to pull and move the opening and closing permanent magnet upward when one surface of the attractive permanent magnet 520A moves while in contact with an upper surface of the cap and vertically faces one surface of the opening and closing permanent magnet at a predetermined position, the repulsive permanent magnet 520B which is also a strong permanent magnet such as neodymium and generates a repulsive force using the same pole to pull and return the opening and closing permanent magnet downward when one surface of the repulsive permanent magnet 520B moves while in contact with the upper surface of the cap and vertically faces one surface of the opening and closing permanent magnet at the predetermined position, the holder 600A of which in a body is provided with a plurality of cylinders into which the attractive permanent magnet and the repulsive permanent magnet, the driving device 700 which is fixed to one protruding surface of the cap and in which the holder is attached to a driving shaft, reciprocated, and is moved to the predetermined position so that each of one surface of the attractive permanent magnet and one surface of the repulsive permanent magnet faces or is separated from one surface of the opening and closing permanent magnet, and a cover 800 of which a protrusion of one side of a lower end is coupled to a groove formed at one side of the cap to protect the driving device and the reciprocating movement of the holder from the outside.

Hereinafter, a pilot-operated elastic valve according to a second embodiment will be described.

The pilot-operated elastic valve operates in a method in which an orifice of a valve body 100 is indirectly opened or closed through a pilot hole, and an opening and closing permanent magnet is returned by an elastic force of a spring.

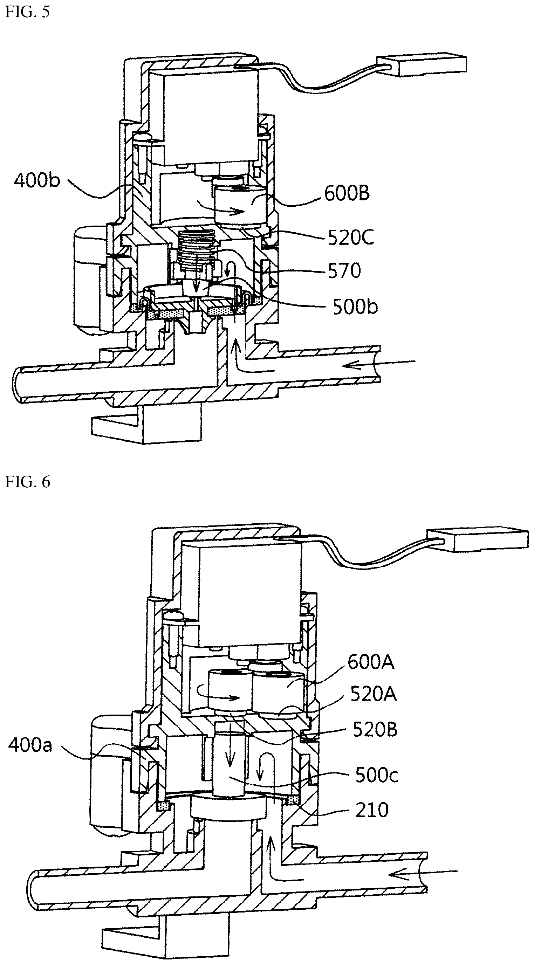

That is, as in FIG. 5, the pilot-operated elastic valve operates in a method in which, since a pressure in the valve is high like the pilot-operated magnetic valve, the pilot hole of a stem 300 is indirectly opened or closed to open or close the orifice using a diaphragm 200, and an opening and closing permanent magnet 500b configured to open or close the pilot hole is moved upward by a mutual attractive force with an attractive permanent magnet 520C and is returned by an elastic force of a spring 570.

A process in which the pilot-operated elastic valve allows or blocks a flow of a fluid will be described. In the process of allowing the flow, when a driving device 700 moves a holder 600B to a predetermined position and the attractive permanent magnet faces the opening and closing permanent magnet, an attractive force is generated to pull the opening and closing permanent magnet upward so as to open the pilot hole, and in this case, like the pilot-operated magnetic valve, a fluid pressure on an upper surface of the diaphragm decreases, a fluid pressure on a lower surface is applied to the diaphragm, and the diaphragm is moved upward to open the orifice so that the fluid flows.

Meanwhile, in the process of blocking the fluid using an elastic force, when the driving device moves the holder to a predetermined position to separate the opening and closing permanent magnet from the facing attractive permanent magnet, the mutual attractive force is removed, the opening and closing permanent magnet is moved and returned downward by an elastic force of the spring to close the pilot hole, and the fluid is blocked by the diaphragm in the same method as that of the pilot-operated magnetic valve.

Features of the above-described pilot-operated elastic valve are as follows. In a high-pressure multi-valve such as a high-pressure three-way valve or a four-way valve, when a flow function using a magnetic force of the permanent magnets and a block function using an elastic force of the spring of the above-described pilot-operated elastic valve are individually applied to each valve, since one driving device can open or close a plurality of valves using magnetic forces of the permanent magnets, a use can be usefully expanded to the high-pressure multi-valve.

Components of the above-described pilot-operated elastic valve will be described.

Components that are the same as those of the pilot-operated magnetic valve will be listed, but detailed descriptions thereof will be omitted, and components that do not overlap those of the pilot-operated magnetic valve will be mainly described.

The components of the pilot-operated elastic valve include the valve body 100 which is the same as that of the pilot-operated magnetic valve, the diaphragm 200 which is the same as that of the pilot-operated magnetic valve, the stem 300 which is the same as that of the pilot-operated magnetic valve, a cap 400b which is fastened to an upper portion of the valve body while pressing one surface of the diaphragm to maintain airtightness for a fluid between the inside and outside of the valve body and in which a guide surface having a vertical cylindrical shape is formed on a lower surface, the opening and closing permanent magnet 500b which vertically moves along the guide surface of the cap to open or close the pilot hole and in which an entire surface of a permanent magnet 530a is surrounded by a protection member 550b having a plurality of support protrusions protruding from one lower side to prevent corrosion by the fluid as in a cross-sectional perspective view of FIG. 9, and a rubber tip 560a formed of a rubber material is attached to one end of the protection member to maintain airtightness between the protection member and the pilot hole, the spring 570 which is inserted between a lower surface of the cap and the support protrusions of the opening and closing permanent magnet 500b while maintaining elasticity and brings the opening and closing permanent magnet into close contact with the orifice using an elastic force, the attractive permanent magnet 520C which is a strong permanent magnet such as neodymium and generates an attractive force to pull and move the opening and closing permanent magnet upward when one surface of the attractive permanent magnet 520C moves while in contact with an upper surface of the cap and vertically faces one surface of the opening and closing permanent magnet at a predetermined position, the holder 600B in which a cylinder is formed in a body of the holder 600B and into which the attractive permanent magnet is inserted, the driving device 700 which is the same as that of the pilot-operated magnetic valve, and a cover 800 which is the same as that of the pilot-operated magnetic valve.

Hereinafter, a direct-operated magnetic valve according to a third embodiment will be described.

The direct-operated magnetic valve operates in a method in which an opening and closing permanent magnet directly opens or closes an orifice of a valve body, and the opening and closing permanent magnet returns using a magnetic force of a permanent magnet.

That is, as in FIG. 6, the direct-operated magnetic valve operates in a method in which the opening and closing permanent magnet 500c directly opens and closes the orifice using a low pressure (for example, less than 0.7 bar) in the valve, and the opening and closing permanent magnet is returned by a repulsive interaction with a repulsive permanent magnet 520B which is a permanent magnet.

A process in which the above-described direct-operated magnetic valve allows or blocks a flow of a fluid will be described.

When a driving device 700 moves a holder 600A to a predetermined position and an attractive permanent magnet 520A faces the opening and closing permanent magnet, the opening and closing permanent magnet is pulled upward by an attractive force to open the orifice so that a fluid flows, and when the driving device moves the holder to an original position and the repulsive permanent magnet 520B vertically faces the opening and closing permanent magnet, a repulsive force is generated to move and return the opening and closing permanent magnet downward to close the orifice so that the fluid is blocked.

Features of the direct-operated magnetic valve are as follows. Since the orifice is directly opened or closed by magnetic forces of permanent magnets, a structure of the valve configured to allow or block a flow of a fluid is simple, and the flow is quickly allowed or blocked. In addition, since an open or closed state of the orifice is continuously maintained by a magnetic force, the method is useful to a valve through which a fluid is discharged at a low pressure using low power.

Components of the above-described direct-operated magnetic valve will be described. Components that are the same as those of the pilot-operated magnetic valve will be listed, but detailed descriptions thereof will be omitted, and components that do not overlap those of the pilot-operated magnetic valves will be mainly described.

The components of the direct-operated magnetic valve include a valve body 100 which is the same as that of the pilot-operated magnetic valve, a packing 210 pressed against an annular groove on an upper portion of the valve body, a cap 400a which is fastened to an upper portion of the valve body while pressing an upper surface of the packing to maintain airtightness for a fluid in the valve body and in which a guide surface having a vertical cylindrical shape is formed on a lower surface, the opening and closing permanent magnet 500c which is a strong permanent magnet such as neodymium, vertically moves along the guide surface of the cap to open or close the orifice, and in which an entire surface of a permanent magnet 530b is surrounded by a protection member 550c to prevent corrosion by a fluid as in the cross-sectional perspective view of FIG. 8, and a rubber tip 560b formed of a rubber material is attached to one end of the protection member to maintain airtightness between the protection member and the orifice, the attractive permanent magnet 520A which is the same as that of the pilot-operated magnetic valve, the repulsive permanent magnet 520B which is the same as that of the pilot-operated magnetic valve, the holder 600A which is the same as that of the pilot-operated magnetic valve, the driving device 700 which is the same as that of the pilot-operated magnetic valve, and a cover 800 which is the same as that of the pilot-operated magnetic valve.

Hereinafter, a direct-operated elastic valve according to a fourth embodiment will be described.

The direct-operated elastic valve operates in a method in which an opening and closing permanent magnet directly opens or closes an orifice of a valve body, and the opening and closing permanent magnet is returned by an elastic force of a spring.

That is, as in FIG. 7, the direct-operated elastic valve operates in a method in which, since a pressure in the valve is low like the direct-operated magnetic valve, an opening and closing permanent magnet 500d directly opens or closes the orifice to allow or block a flow of a fluid, and the opening and closing permanent magnet is moved upward by an attractive force of an attractive permanent magnet 520C and is returned by an elastic force of a spring 570.

A process in which the above-described direct-operated elastic valve allows or blocks a flow of a fluid will be described.

When a driving device 700 moves a holder 600B to a predetermined position, the attractive permanent magnet faces the opening and closing permanent magnet to pull the opening and closing permanent magnet upward using an attractive force to open the orifice so that a fluid flows, and when the driving device moves the holder back to an original position, the attractive force between the opening and closing permanent magnet and the attractive permanent magnet is removed, and the opening and closing permanent magnet is returned downward by an elastic force of the spring to block the fluid.

Features of the above-described pilot-operated elastic valve are as follows. Like the features of the pilot-operated elastic valve, in a low-pressure multi-valve such as a low-pressure three-way valve or a four-way valve, when a flow function using a magnetic force of the permanent magnets and a block function using an elastic force of the spring of the above-described direct-operated elastic valve are individually applied to each valve, since one driving device can open or close a plurality of valves using magnetic forces of the permanent magnets, a use can be usefully expanded to a low-power and low-pressure multi-valve.

Components of the above-described direct-operated elastic valve will be described. Components that are the same as those of the pilot-operated magnetic valve, the pilot-operated elastic valve, and direct-operated magnetic valve will be listed, but detailed descriptions thereof will be omitted, and components that do not overlap those of the pilot-operated magnetic valve, the pilot-operated elastic valve, and direct-operated magnetic valve will be mainly described.

The components of the direct-operated elastic valve include a valve body 100 which is the same as that of the pilot-operated magnetic valve, a packing 210 which is the same as that of the direct-operated magnetic valve, a cap 400b which presses one surface of the packing while fastened to an upper portion of the valve body to maintain airtightness for a fluid in the valve body and in which a guide surface having a vertical cylindrical shape is formed on a lower surface, the opening and closing permanent magnet 500d which vertically moves along the guide surface of the cap to open or close the orifice of the valve body and in which an entire surface of a permanent magnet 530b is surrounded by a protection member 550d having a plurality of support protrusions protruding from one lower side to prevent corrosion by the fluid as in the cross-sectional perspective view of FIG. 9, and a rubber tip 560b formed of a rubber material is attached to one end of the protection member to maintain airtightness between the protection member and the orifice, the spring 570 which is the same as that of the pilot-operated elastic valve,
the attractive permanent magnet 520C which is the same as that of the pilot-operated elastic valve, the holder 600B which is the same as that of the pilot-operated elastic valve, the driving device 700 which is the same as that of the pilot-operated magnetic valve, and a cover 800 which is the same as that of the pilot-operated magnetic valve.

Embodiments of the present invention are not limited to the above-described embodiments, and the technical scope of the present invention includes not only all changed or modified embodiments derived from the technical spirit described in the claims and their equivalents, but also any embodiment which achieves the same operational effect.

### [Industrial Applicability]

The present invention relates to improved products which solve problems of solenoid valves used in washing machines, water purifiers, dishwashers, boilers, and the like or electric ball valves used in various pipes and can be used instead of the solenoid valves or the electric ball valves. Since main components of the present invention can be manufactured in a plastic injection molding method or a rubber molding method, and the components can be fitted to each other and fastened using screws, manufacturing and assembly are easy, and thus industrial applicability can be wide.

## Claims

1. A valve opened or closed using a permanent magnet, the valve comprising:
a valve body (100) of which one side is provided with each of an inlet pipe and an outlet pipe and a center is provided with an orifice having a cylindrical shape;
a diaphragm (200) of which one surface is pressed against an annular groove of an upper portion of the valve body and a lower surface comes into close contact with the orifice to open or close the orifice;
a stem (300) which is attached to an upper surface of the diaphragm and in which a pilot hole is formed so that an upper surface of the stem communicates with an inner portion of the orifice;
a cap (400a) which is fastened to the upper portion of the valve body while pressing one surface of the diaphragm and of which a lower surface is provided with a guide surface having a vertical cylindrical shape;
an opening and closing permanent magnet (500a) in which a permanent magnet (530a) is embedded and which vertically moves along the guide surface of the cap to open or close the pilot hole;
an attractive permanent magnet (520A) which is a permanent magnet, reciprocates while in contact with an upper surface of the cap, and faces the opening and closing permanent magnet to generate an attractive force to move the opening and closing permanent magnet upward;
a repulsive permanent magnet (520B) which is a permanent magnet, reciprocates while in contact with the upper surface of the cap, and faces the opening and closing permanent magnet to generate a repulsive force to move the opening and closing permanent magnet downward;
a holder (600A) of which a body is provided with a plurality of cylinders into which the attractive permanent magnet and the repulsive permanent magnet are inserted; and
a driving device (700) which is fixed to one surface of the cap and in which the holder is attached to a driving shaft and reciprocated to a predetermined position so that each of the attractive permanent magnet and the repulsive permanent magnet vertically faces or is separated from the opening and closing permanent magnet.

2. A valve opened or closed using a permanent magnet, the valve comprising:
a valve body (100) of which one side is provided with each of an inlet pipe and an outlet pipe and a center is provided with an orifice having a cylindrical shape;
a diaphragm (200) of which one surface is pressed against an annular groove of an upper portion of the valve body and a lower surface comes into close contact with the orifice to open or close the orifice;
a stem (300) which is attached to an upper surface of the diaphragm and in which a pilot hole is formed so that an upper surface of the stem communicates with an inner portion of the orifice;
a cap (400b) which is fastened to the upper portion of the valve body while pressing one surface of the diaphragm and in which a guide surface having a vertical cylindrical shape is formed on a lower surface of the cap;
an opening and closing permanent magnet (500b) in which a permanent magnet (530a) is embedded and which vertically moves along the guide surface of the cap to open or close the pilot hole;
a spring (570) which is inserted between the lower surface of the cap and a support protrusion of the opening and closing permanent magnet and brings the opening and closing permanent magnet into close contact with the orifice using an elastic force of the spring;
an attractive permanent magnet (520C) which is a permanent magnet, reciprocates while in contact with an upper surface of the cap, and faces the opening and closing permanent magnet to generate an attractive force to move the opening and closing permanent magnet upward;
a holder (600B) of which a body is provided with a cylinder into which the attractive permanent magnet is inserted; and
a driving device (700) which is fixed to one surface the cap and in which the holder is attached to a driving shaft and reciprocated to a predetermined position so that the attractive permanent magnet vertically faces or is separated from the opening and closing permanent magnet.

3. A valve opened or closed using a permanent magnet, the valve comprising:
a valve body (100) of which one side is provided with each of an inlet pipe and an outlet pipe and a center is provided with an orifice having a cylindrical shape;
a packing (210) pressed against an annular groove of an upper portion of the valve body;
a cap (400a) which is fastened to the upper portion of the valve body while pressing one surface of the packing and of which a lower surface is provided with a guide surface having a vertical cylindrical shape;
an opening and closing permanent magnet (500c) in which a permanent magnet (530b) is embedded and which vertically moves along the guide surface of the cap to open or close the pilot hole;
an attractive permanent magnet (520A) which is a permanent magnet, reciprocates while in contact with an upper surface of the cap, and faces the opening and closing permanent magnet to generate an attractive force to move the opening and closing permanent magnet upward;
a repulsive permanent magnet (520B) which is a permanent magnet, reciprocates while in contact with the upper surface of the cap, and faces the opening and closing permanent magnet to generate a repulsive force to move the opening and closing permanent magnet downward;
a holder (600A) of which a body is provided with a plurality of cylinders into which the attractive permanent magnet and the repulsive permanent magnet are inserted; and
a driving device (700) which is fixed to one surface of the cap and in which the holder is attached to a driving shaft and reciprocated to a predetermined position so that each of the attractive permanent magnet and the repulsive permanent magnet vertically faces or is separated from the opening and closing permanent magnet.

4. A valve opened or closed using a permanent magnet, the valve comprising:
a valve body (100) of which one side is provided with each of an inlet pipe and an outlet pipe and a center is provided with an orifice having a cylindrical shape;
a packing (210) pressed against an annular groove of an upper portion of the valve body;
a cap (400b) which is fastened to the upper portion of the valve body while pressing one surface of the packing and of which a lower surface is provided with a guide surface having a vertical cylindrical shape;
an opening and closing permanent magnet (500d) in which a permanent magnet (530b) is embedded and which vertically moves along the guide surface of the cap to open or close the pilot hole;
a spring (570) which is inserted between the lower surface of the cap and a support protrusion of the opening and closing permanent magnet and brings the opening and closing permanent magnet into close contact with the orifice using an elastic force of the spring;
an attractive permanent magnet (520C) which is a permanent magnet, reciprocates while in contact with an upper surface of the cap, and faces the opening and closing permanent magnet to generate an attractive force to move the opening and closing permanent magnet upward;
a holder (600B) of which a body is provided with a cylinder into which the attractive permanent magnet is inserted; and
a driving device (700) which is fixed to one surface the cap and in which the holder is attached to a driving shaft and reciprocated to a predetermined position so that the attractive permanent magnet vertically faces or is separated from the opening and closing permanent magnet.

5. The valve of any one of claims 1 to 4, wherein the driving device (700) includes a servo motor.

6. The valve of any one of claims 1 to 4, further comprising a cover (800) coupled to a groove in one side of the cap.

7. The valve of claim 1, wherein, in the opening and closing permanent magnet (500a):
a protection member (550a) surrounds an entire surface of the permanent magnet (530a); and
a rubber tip (560a) is attached to one end of the protection member to maintain airtightness between the protection member and the pilot hole of the stem (300).

8. The valve of claim 4, wherein, in the opening and closing permanent magnet (500d):
a protection member (550d) of which one side is provided with a plurality of protruding support protrusions surrounds an entire surface of the permanent magnet (530b); and
a rubber tip (560b) is attached to one end of the protection member to maintain airtightness between the protection member and the orifice of the valve body (100).
